# EUROPÄISCHE PATENTANMELDUNG

(11) **EP 1 251 349 A1**
(43) Veröffentlichungstag der Anmeldung: **23.10.2002**
(21) Anmeldenummer: 02090140.1
(22) Anmeldetag: 12.04.2002
(51) Int. Cl.: G01N 29/24

(54) **Elektromagnetischer akustischer Prüfkopf zur zerstörungsfreien Prüfung von warmgefertigten Werkstücken**

(30) Priorität: 18.04.2001 DE 10120169
(71) Anmelder: V & M Deutschland GmbH, 40472 Düsseldorf (DE)
(72) Erfinder: Graff, Alfred, 45239 Essen (DE); Rohde, Hans-Jürgen, 47249 Duisburg (DE); Arzt, Norbert, 41469 Neuss (DE); Nitsche, Stefan, 45473 Mülheim (DE)
(74) Vertreter: Meissner, Peter E., Dipl.-Ing.

(57) **Zusammenfassung**

Die Erfindung betrifft einen Prüfkopf zur zerstörungsfreien Prüfung von relativ dazu sich bewegenden Werkstücken mit Ultraschall mit einem in einem Gehäuse angeordneten Magnetsystem, auf dessen dem zu prüfenden Werkstück zugewandter Fläche ein Magnetfeldkonzentrator angeordnet ist, auf dessen dem Werkstück zugewandter Flachseite ein zumindest eine Erreger- und Empfangsspule bestehendes Spulensystem befestigt ist und der Magnetfeldkonzentrator mittels eines diesen umgebenden und mit dem Gehäuse verbindbaren Rahmens gehalten wird und im Ausschnittbereich des Rahmens eine das Spulensystem abdeckende Schutzkappe angeordnet ist. Dabei ist in beiden Endbereichen des Rahmens (10) eine schlitzartige Öffnung (13) vorgesehen, die in Verbindung steht mit einem an der Unterseite des Gehäuses (1) angeordneten Anschluss (14) für ein Kühlmedium und dass in dem dem Werkstück zugewandten Flachteil (20) der Schutzkappe (9) Keramikmaterial eingebettet ist.

## Beschreibung

Die Erfindung betrifft einen Prüfkopf zur zerstörungsfreien Prüfung von relativ dazu sich bewegenden Werkstücken mit Ultraschall gemäß dem Oberbegriff des Hauptanspruches.

Ein gattungsmäßig ausgebildeter Prüfkopf ist aus der DE 195 49 207 A1 bekannt. Dieser weist eine auf einer Trägerplatte angeordnete Sonde auf, die aus einem Magnetfeldkonzentrator besteht, auf dessen dem Werkstück zugewandter Flachseite ein aus mindestens einer Sende- und Empfangsspule bestehendes Spulensystem befestigt ist und die Mantelfläche der Sonde von einem mit der Trägerplatte verbindbaren Rahmen umgeben ist und im sondenfreien Endbereich des Prüfkopfes je ein in der Höhe verstellbarer großflächiger Gleitstein angeordnet ist und in den Ausschnittbereich des Rahmens der Endbereich der Sonde hinein ragt und die dem Werkstück zugewandte Stirnseite der Sonde mit einem Verschleißschutzelement abgedeckt ist, das genau bündig liegt mit der dem Werkstück zugewandten Fläche des Rahmens. Das Verschleißschutzelement besteht aus einem faserverstärkten laminierten Werkstoff und ist als separates Formteil mit einem hutförmigen Querschnitt ausgebildet.

Bei der Prüfung von warmgefertigten Rohren treten insofern Probleme auf, da durch die rauhe Oberfläche und dem vielen lose anfallenden Zunder die Schutzkappen schnell verschleißen und ersetzt werden müssen, was einen Stillstand der Prüfanlage bedeutet.

Eine Lösungsmöglichkeit wäre, den Abstand zwischen dem zu prüfenden Werkstück und Prüfkopf zu erhöhen um den Verschleiß der Schutzkappe zu reduzieren. Jede Abstandserhöhung mindert aber entscheidend den Signal-Rauschabstand. Die Möglichkeit dem, z. B. durch Erhöhung der Magnetfeldstärke, entgegen zu wirken sind aber physikalisch und baulich Grenzen gesetzt.

In der US 6,125,706 ist ein Prüfkopf zur zerstörungsfreien Prüfung mit Ultraschall (EMAT) offenbart, der zur Prüfung von heißen Werkstücken mit Gas gekühlt wird. Ein aus Permanentmagneten bestehendes Magnetsystem ist in einem Gehäuse angeordnet, das Kühlkanäle aufweist und dessen abschließende Bodenplatte ebenfalls mit Kühlkanälen versehen ist. Zum Schutz des Fußbereiches des Magnetfeldkonzentrators und des aus Erreger- und Empfangsspule bestehenden Spulensystems weist der Fußbereich mehrere parallel zur Werkstückoberfläche liegende Kanäle auf. Der Austritt des Kühlmediums erfolgt durch mehrere in der Bodenplatte angeordnete, vertikal verlaufende Öffnungen. Das dem Werkstück zugewandte Spulensystem wird auf der dem Werkstück zugewandten Seite durch eine Keramikplatte geschützt und ist, um einen direkten Kontakt mit der Werkstückoberfläche zu vermeiden, etwas rückversetzt in der Bodenplatte angeordnet. Damit der Prüfkopf wahlweise auch entlang des Werkstückes bewegt werden kann, werden in den Endbereichen des Gehäuses Rollen angeordnet.

Aufgabe der Erfindung ist es, einen Prüfkopf anzugeben, der bei hohem Signal-Rauschabstand insbesondere für die Prüfung von warmgefertigten Rohren geeignet ist.

Diese Aufgabe wird ausgehend vom Oberbegriff in Verbindung mit den kennzeichnenden Merkmalen des Patentanspruches 1 gelöst. Vorteilhafte Weiterbildungen sind jeweils Gegenstand von Unteransprüchen.

Nach der Lehre der Erfindung ist in beiden Endbereichen des Rahmens je eine schlitzartige Öffnung vorgesehen, die in Verbindung steht mit einem an der Unterseite des Gehäuses angeordneten Anschluss für ein Kühlmedium, das geführt durch das Gehäuse geleitet wird bis zu den einen Auslass bildenden schlitzartigen Öffnungen.

Der Vorteil dieser vorgeschlagenen Anordnung ist darin zu sehen, dass durch den Austritt des Kühlmediums aus den Öffnungen zum einen dieser Bereich intensiv gekühlt wird und zum anderen lose anfallender Zunder im Kontaktbereich weggeblasen wird.

Da die Prüfköpfe als elektrodynamische Wandler betrieben werden, bieten sich nur Gase und insbesondere Luft als Kühlmedium an.

Zusätzlich wird vorgeschlagen, in dem dem Werkstück zugewandten Flachteil der Schutzkappe Keramikmaterial einzubetten. Zwar ist aus der DE 43 04 548 A1 schon bekannt, die Verschleißseite der Schutzkappe mit einem verschleißfesten Material, z. B. Al₂O₃-Pulver, mittels eines Haftvermittlers zu beschichten. Diese Schicht ist aber sehr dünn, so dass die Standzeitverbesserung nur von kurzer Dauer ist. Sobald in einem kleinen Teilbereich der Verschleißseite der Schutzkappe die Beschichtung abgetragen ist, ist der darunter liegende Bereich besonders anfällig für die Direktberührung mit der Oberfläche des zu prüfenden Werkstückes.

Nach einem weiteren Merkmal der Erfindung befindet sich der Anschluss für das Kühlmedium an der Unterseite des Gehäuses. Das Kühlmedium wird vom Anschluss bis zu den einen Auslass bildenden Öffnungen geführt transportiert. Dazu sind Winkelbleche als Umlenkhilfen im Gehäuse angeordnet. Insbesondere soll damit der die höchste Temperatur aufweisende Kern des Magnetsystems intensiv gekühlt werden. Das ist von Bedeutung für die Wärmebelastung des Spulensystems (Erreger- und Empfangsspule), verursacht durch die Spulen des Elektromagneten. Durch die Kühlung lassen sich Magnetfeldstärken von ca. 2 Tesla (gemessen im Luftspalt) bei einer moderaten Betriebstemperatur und Größe des Prüfsystems erreichen. Diese hohen Magnetfeldstärken wiederum erlauben es, den Abstand des Spulensystems zum Werkstück bis auf ca. 2 mm zu erhöhen, so dass die Schutzkappe weniger beansprucht wird.

In gleicher Weise wirkt auch eine andere vorgeschlagene Maßnahme. Danach wird zwischen der Halterung für die Gleitsteine und dem Gehäuse eine Isolierschicht angeordnet. Eine solche Isolierschicht kann beispielsweise eine Folie aus Teflon sein. Durch die Anordnung der Isolierschicht wird weniger Wärme von den bei der Prüfung heiß werdenden Gleitsteinen auf das Gehäuse und damit auf das Spulensystem übertragen.

Im Unterschied zum bekannten Stand der Technik ist das Keramikmaterial vorzugsweise als dünnes Keramikplättchen mit einer Dicke <0,8 vorzugsweise 0,5 mm ausgebildet. Dieses Keramikplättchen ist von beiden Seiten mit Laminat beschichtet. Ist die dem Werkstück zugewandte Laminatschicht abgetragen, dann schützt das frei liegende Keramikplättchen das unter der Schutzkappe liegende Sondensystem. Damit das Keramikplättchen nicht aus der Schutzkappe heraus fallen kann, weist dieses wenigstens eine angerauhte oder eine poröse Oberfläche auf, so dass das Laminat in die Unebenheiten eindringen kann. Dieses bildet eine quasi Verklammerung, so dass das Keramikplättchen auf der innen liegenden Laminatschicht fest haften bleibt. Alternativ kann das Keramikmaterial auch als einzelne Körner ausgebildet sein,
die ungleichmäßig verteilt in der Laminatmatrix eingebettet sind. Das erhöht zwar den Verschleißwiderstand der Schutzkappe über den gesamten Querschnitt erreicht aber nicht den hohen Widerstandswert eines Keramikplättchens.

Weitere Merkmale, Vorteile und Einzelheiten der Erfindung ergeben sich aus der nachfolgenden Beschreibung von einem in einer Zeichnung dargestellten Ausführungsbeispiel.

Es zeigt:
- Figur 1a: schematisch eine Draufsicht auf einen erfindungsgemäß ausgebildeten Prüfkopf
- Figur 1b: eine Seitenansicht
- Figur 1c: einen Schnitt A - A in Figur 1a
- Figur 2: einen im vergrößerten Maßstab dargestellten Teil-Schnitt B - B in Figur 1a

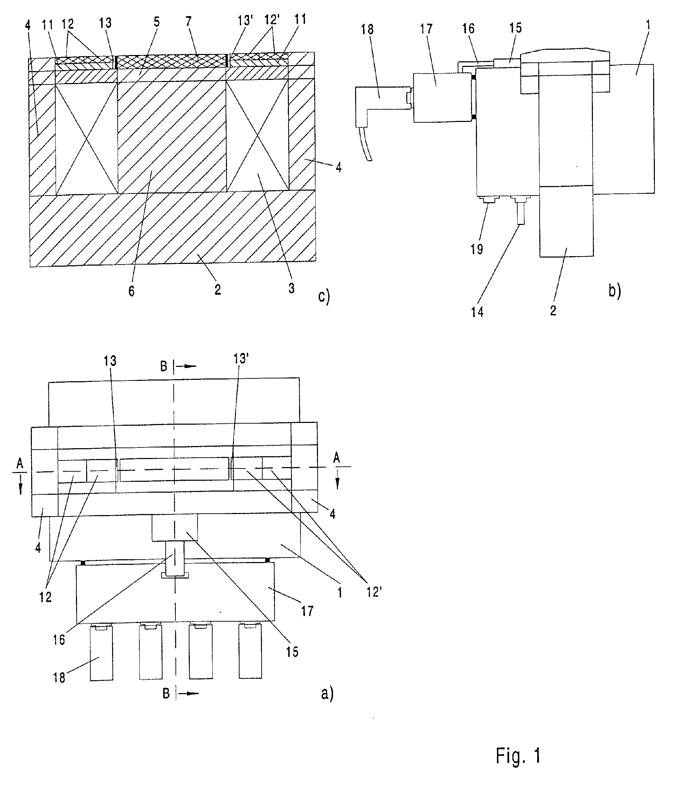

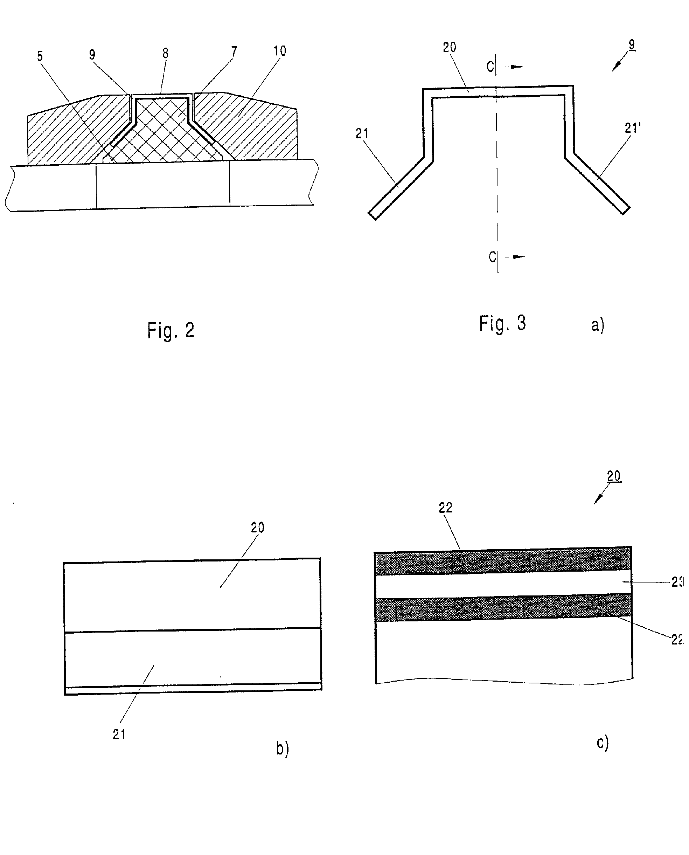

- Figur 2: einen im vergrößerten Maßstab dargestellten Teil-Schnitt B - B in Figur 1a
- Figur 3a: eine Vorderansicht einer erfindungsgemäß ausgebildeten Schutzkappe
- Figur 3b: eine Seitenansicht
- Figur 3c: einen Schnitt C - C in Figur 3a

In den Figuren 1a bis 1c sowie Figur 2 sind in einer Draufsicht, einer Seitenansicht und in zwei Schnitten ein erfindungsgemäß ausgebildeter Prüfkopf dargestellt. Er besteht aus einem Gehäuse 1 mit einem darin angeordneten Magnetsystem, das ein Magnetjoch 2, eine Elektromagnetspule 3 und einen Joch-Rückschluss 4 aufweist. Auf der dem - hier nicht dargestellten Werkstück - zugewandten Stirnseite 5 des Kerns 6 des Magnetjoches 2 ist ein Magnetfeldkonzentrator 7 (Figur 2) angeordnet. Das aus mindestens einer Erreger- und einer Empfangsspule bestehende Spulensystem 8 (hier nur angedeutet) ist auf der dem Werkstück zugewandten Flachseite des Magnetfeldkonzentrators 7 befestigt (Figur 2).
Um das empfindliche Spulensystem 8 zu schützen, ist eine Schutzkappe 9 vorgesehen, die das Spulensystem 8 abdeckt und durch einen, den Magnetfeldkonzentrator 7 umfassenden Rahmen 10, gehalten wird. Der Rahmen 10 ist mittels Schrauben am oberen Teil des Gehäuses befestigt.

In den Seitenbereichen des Prüfkopfes sind in Halterungen 11 Gleitsteine 12 angeordnet. Auf die Beschreibung der Art, der Anordnung und der Befestigung der Gleitsteine kann hier verzichtet werden, da dies bekannt ist (DE 195 49 207 A1).

Erfindungsgemäß ist in beiden Endbereichen des Rahmens 10 je eine schlitzartige Öffnung 13, 13' vorgesehen. Diese stehen als Auslass mit einem auf der Unterseite des Gehäuses 1 angeordneten Anschluss 14 in Verbindung. Durch diesen Anschluss 14 kann ein Gas, vorzugsweise Luft, als Kühlmedium geleitet werden. Das Kühlmedium durchströmt das Gehäuse 1 und insbesondere wird es am Kern 6 des Magnetjoches 2 entlang geführt, da dieser Teil des Magnetsystems während des Betriebes des Prüfkopfes die höchsten Temperaturen aufweist. In den beiden schlitzartigen Öffnungen 13, 13' tritt das Kühlmedium wieder aus. Beim Austritt kühlt das Medium zum Einen auch die benachbart angeordneten Gleitsteine 12, 12' und es wird außerdem zum Wegblasen des losen Zunders im Sondenbereich genutzt.

Ergänzend sei noch darauf hingewiesen, dass im Sinne einer kompakten Bauweise einmal direkt am Rahmen 10 ein staubgeschützter Sondenstecker 15 angeflanscht ist. Er ist über eine elektrische Verbindung 16 mit einer Verstärkerelektronik 17 verbunden. An dieser Verstärkerelektronik 17 sind Steckverbindungen 18 angebracht, um eine Verbindung mit einer hier nicht dargestellten Vorortelektronik darzustellen. Der elektrische Anschluss 19 für die Magnetspule 3 befindet sich ebenfalls auf der Unterseite des Gehäuses 1.

In Figur 3a bis 3c ist die erfindungsgemäß ausgebildete Schutzkappe 9 dargestellt. Sie ist im Querschnitt hutartig ausgebildet mit einem dem Werkstück zugewandten Flachteil 20 und zwei trapezförmig verlaufenden Seitenteilen 21, 21'. In Figur 3c sind im Schnitt in einer etwas vergrößerten Darstellung die Einzelheiten zu erkennen. Im Flachteil 20 ist zwischen zwei Laminat-Schichten 22, 22' ein dünnes Keramikplättchen 23 eingebettet. Die Dicke dieses Keramikplättchens 23 liegt bei unter 0,8 mm, vorzugsweise bei 0,5 mm.

### Bezugszeichenliste

| **Nr.** | **Bezeichnung** |
|---|---|
| 1 | Gehäuse |
| 2 | Magnetjoch |
| 3 | Elektromagnetspule |
| 4 | Joch-Rückschluss |
| 5 | Stirnseite Kern |
| 6 | Kern des Magnetjochs |
| 7 | Magnetfeldkonzentrator |
| 8 | Spulensystem |
| 9 | Schutzkappe |
| 10 | Rahmen |
| 11 | Halterung |
| 12, 12' | Gleitsteine |
| 13, 13' | schlitzartige Öffnung |
| 14 | Anschluss für Kühlmedium |
| 15 | Sondenstecker |
| 16 | elektrische Verbindung |
| 17 | Verstärkerelektronik |
| 18 | Steckerverbindung |
| 19 | elektrischer Anschluss |
| 20 | Flachteil Schutzkappe |
| 21, 21' | Seitenteile Schutzkappe |
| 22, 22' | Laminatschicht |
| 23 | Keramikplättchen |

## Patentansprüche

1. Prüfkopf zur zerstörungsfreien Prüfung von relativ dazu sich bewegenden Werkstücken mit Ultraschall mit einem in einem Gehäuse angeordneten Elektromagnetsystem, auf dessen dem zu prüfenden Werkstück zugewandter Fläche ein Magnetfeldkonzentrator angeordnet ist, auf dessen dem Werkstück zugewandter Flachseite ein aus zumindest einer Erreger- und Empfangsspule bestehendes Spulensystem befestigt ist und der Magnetfeldkonzentrator mittels eines diesen umgebenden und mit dem Gehäuse verbindbaren Rahmens gehalten wird und im Ausschnittbereich des Rahmens eine das Spulensystem abdeckende, aus einem faserverstärkten laminierten Werkstoff bestehende Schutzkappe angeordnet ist, die genau bündig liegt mit der dem Werkstück zugewandten Fläche des Rahmens, und während der Prüfung mit der Werkstückoberfläche in Berührung kommen kann und im sondenfreien
Endbereich des Gehäuses mindestens eine einen Gleitstein aufnehmende Halterung befestigt ist
**dadurch gekennzeichnet,**
**dass** in beiden Endbereichen des Rahmens (10) je eine schlitzartige Öffnung (13, 13') vorgesehen ist, die in Verbindung steht mit einem an der Unterseite des Gehäuses (1) angeordneten Anschluss (14) für ein Kühlmedium, das geführt durch das Gehäuse (1) geleitet wird bis zu den einen Auslass bildenden
Öffnungen (13, 13') und das Kühlmedium innerhalb des Gehäuses (1), vorzugsweise entlang des Kerns (6) des Elektromagnetsystems, geführt wird und dass in dem dem Werkstück zugewandten Flachteil (20) der Schutzkappe (9) Keramikmaterial eingebettet ist.

2. Prüfkopf nach Anspruch 1
**dadurch gekennzeichnet,**
**dass** zwischen der Halterung (11) für die Gleitsteine (12, 12') und dem Gehäuse (1) eine Isolierschicht angeordnet ist.

3. Prüfkopf nach Anspruch 1
**dadurch gekennzeichnet,**
**dass** das Keramikmaterial als dünnes Plättchen (23) ausgebildet ist, das von beiden Seiten mit Laminat (22, 22') beschichtet ist.

4. Prüfkopf nach Anspruch 3
**dadurch gekennzeichnet,**
**dass** das Keramikplättchen (23) eine Dicke weniger als 0,8 mm vorzugsweise von 0,5 mm aufweist.

5. Prüfkopf nach den Ansprüchen 3 und 4
**dadurch gekennzeichnet,**
**dass** das Keramikplättchen (23) eine aufgerauhte Oberfläche aufweist.

6. Prüfkopf nach den Ansprüchen 3 und 4
**dadurch gekennzeichnet,**
**dass** das Keramikplättchen (23) eine poröse Oberfläche aufweist

7. Prüfkopf nach Anspruch 1
**dadurch gekennzeichnet,**
**dass** das Keramikmaterial als einzelne Körner ausgebildet ist, die ungleichmäßig verteilt in der Laminatmatrix eingebettet sind
